# EUROPEAN PATENT APPLICATION

(11) **EP 3 133 863 A1**
(43) Date of publication of application: **22.02.2017**
(21) Application number: 16161406.0
(22) Date of filing: 21.03.2016
(51) Int. Cl.: H04W 36/00, H04W 48/12, H04W 36/24

(54) **TERMINAL REPORTING IN WIRELESS COMMUNICATION SYSTEM**

(30) Priority: 06.08.2015 GB 201513938
(71) Applicant: FUJITSU LIMITED, Kawasaki-shi, Kanagawa 211-8588 (JP)
(72) Inventor: MOULSLEY, Timothy, Caterham, Surrey CR3 5EE (GB); FANG, Yiwei, High Wycombe, HP11 1GD (GB); BUCKNELL, Paul, Brighton, BN2 1SP (GB)
(74) Representative: Stebbing, Timothy Charles

(57) **Abstract**

In a wireless communication system providing a plurality of cells (Cell A, Cell B), the cells broadcast indications related to performance. At least one of the cells (Cell A) is a serving cell for a secondary station (10), and at least one other cell (Cell B) is not a serving cell. The secondary station (10) computes performance metrics for detected ones of the cells. Based on the values of the performance metrics, the secondary station (10) reports measurement/metrics for one or more cells to a primary station (20) providing a serving cell for the secondary station (10). In this way the primary station (20) can know the amount of available resources in each cell suitable for handover, and can make a better handover choice for the secondary station (10).

## Description

### Field of the Invention

The present invention relates to a wireless communication system and more particularly to reporting by terminals in such a system to a base station or access point.

Particularly, but not exclusively, the present invention relates to techniques for assisting selection of a serving cell in wireless communication systems which may be compliant with the UMTS (Universal Mobile Telecommunications Service) or LTE (Long Term Evolution) and LTE-Advanced radio technology standards, and where possibly other radio access technologies may be available such as IEEE802.11, commonly referred to as Wi-Fi.

### Background of the Invention

Wireless communication systems are widely known in which a terminal (also called a user equipment UE, or a station STA) communicates with a base station BS or access point AP within range of the terminal. The term "base station" henceforth denotes either a BS or AP (or combined BS/AP) unless otherwise demanded by the context.

The geographical areas served by one or more base stations are generally referred to as cells, and typically many BSs are provided in appropriate locations so as to form a network covering a wide geographical area more or less seamlessly with adjacent and/or overlapping cells. (In this specification, the terms "system" and "network" are used synonymously). Each BS may support one or more cells and in each cell, the BS divides its available bandwidth, i.e. frequency and time resources, into individual resource allocations for the user equipments which it serves. The terminals are generally mobile and therefore may move among the cells, prompting a need for handover of the communication link to the terminal between the base stations of adjacent cells. A terminal may be in range of (i.e. able to detect signals from and/or communicate with) several cells at the same time, but in the simplest case it communicates with one "serving" cell.

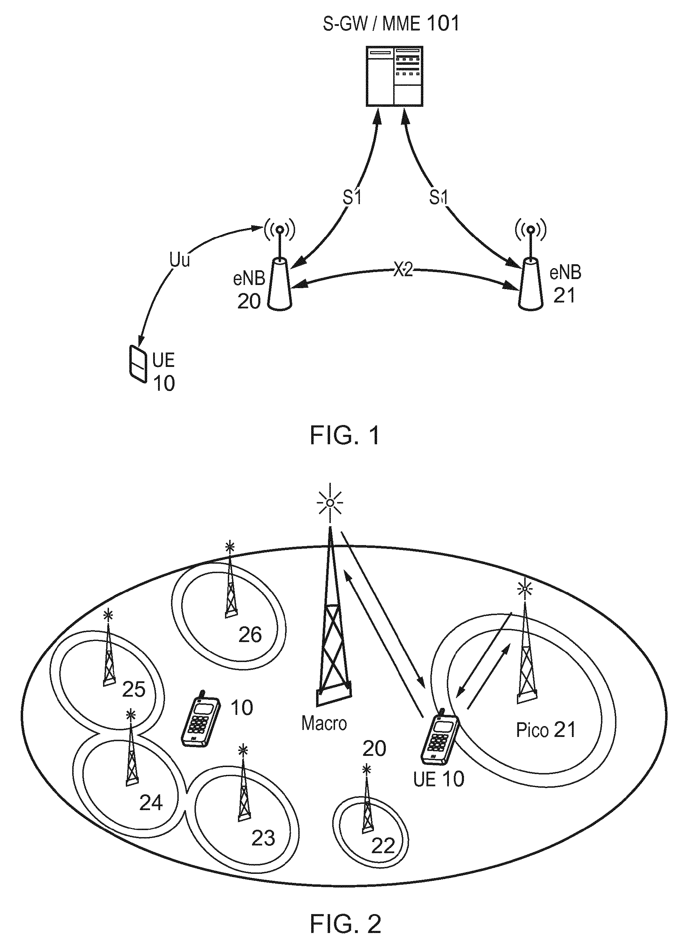

One type of cellular wireless network is based upon the set of standards referred to as Long-Term Evolution (LTE). The current version of the standard, Release 11 (Rel 11), is also referred to as LTE-A (LTE-Advanced), and the specifications for Release 12 are currently being finalised. The network topology in LTE is illustrated in Figure 1. As can be seen, each terminal 10, called a UE in LTE, connects wirelessly over an air interface (labelled Uu in Figure 1) to a base station in the form of an enhanced node-B or eNB 20 or 21. It should be noted that various types of eNB are possible. An eNB may support one or more cells at different carrier frequencies, each cell having differing transmit powers and different antenna configurations, and therefore providing coverage areas (cells) of differing sizes. Multiple eNBs deployed in a given geographical area constitute a wireless network called the E-UTRAN (and henceforth generally referred to simply as "the network"). An LTE network can operate in a Time Division Duplex, TDD, mode in which the uplink and downlink are separated in time but use the same carrier frequency, or Frequency Division Duplex, FDD, in which the uplink and downlink occur simultaneously at different carrier frequencies. Radio Resource Control (RRC) is a protocol layer in the UE and eNB to control various aspects of the air interface, including establishing, maintaining and releasing a RRC connection between the UE and eNB. Thus, for a UE to be served by a cell implies a RRC connection with the eNB providing or controlling that cell.

Each eNB 20 or 21 in turn is connected by a (usually) wired link (S1 in Figure 1) to higher-level or "core network" entities 101, including a Serving Gateway (S-GW), and a Mobility Management Entity (MME) for managing the system and sending control signalling to other nodes, particularly eNBs, in the network. In addition (not shown), a Packet Data Network (PDN) Gateway (P-GW) is present, separately or combined with the S-GW, to exchange data packets with any packet data network including the Internet. Thus, communication is possible between the LTE network and other networks. Meanwhile, the eNBs can communicate among themselves via a wired or wireless X2 interface as indicated in the Figure.

Figure 1 shows what is sometimes called a "homogeneous network"; that is, a network of base stations in a planned layout and which have similar transmit power levels, antenna patterns, receiver noise floors and similar backhaul connectivity to the core network. Current wireless cellular networks are typically deployed as homogeneous networks using a macro-centric planned process. The locations of the base stations are carefully decided by network planning, and the base station settings are properly configured to maximise the coverage and control the interference between base stations. However, future cellular wireless networks will adopt a "heterogeneous network" structure composed of two or more different kinds of cell, also referred to as a Small Cell Network or SCN.

The motivation for SCNs is the idea of network densification: increasing the number of network nodes, and thereby bringing them physically closer to the terminals, in order to improve traffic capacity and extending the achievable user-data rates of a wireless communication system. SCNs achieve network densification by the deployment of complementary low-power nodes under the coverage of an existing macro-node layer. In such a heterogeneous deployment, the low-power nodes provide very high traffic capacity and very high user throughput locally, for example in indoor and outdoor hotspot positions. Meanwhile, the macro layer ensures service availability and Quality of Experience (QoE) over the entire coverage area. In other words, the layer containing the low-power nodes can also be referred to as providing local-area access, in contrast to the wide-area-covering macro layer.

Figure 2 depicts a simple SCN. The large ellipse represents the coverage area or footprint of a Macro cell provided by a base station (Macro BS) 20. The smaller ellipses represent small cells (such as Pico or Femto cells) within the coverage area of the Macro cell, each having a respective low-power base station 21 - 26 (exemplified by Pico BS 21). Here, the Macro cell is a cell providing a "macro layer" of basic coverage in the network of a certain area, and the small cells are overlaid over the Macro cell, using the same or different carrier frequencies, providing a "low-power layer" for capacity boosting purposes particularly within so-called hot spot zones. A UE 10 is able to communicate both with Macro BS 20 and Pico BS 21 as indicated by the arrows in the Figure.

Carrier aggregation (CA) is a technique applicable to the SCN. Using LTE Advanced carrier aggregation, UEs can utilise more than one carrier (frequency band) simultaneously and in this way increase the overall transmission bandwidth. These channels or carriers may be in contiguous elements of the spectrum, or they may be in different bands. Thus, a UE in an SCN may be simultaneously connected to one cell (often, but not necessarily, a Macro cell) having a first carrier frequency and referred to as the "primary cell" (PCell) for that UE: and to one or more other cells (usually but not necessarily small cells) using different carrier frequencies and possibly different frequency bands, and referred to as "secondary cells" (SCells) of that UE. The SCells are provided from the same (or a nearby) location as the PCell. The PCell and the SCell(s) typically operate on different carrier frequencies and possibly on different frequency bands. The UE can receive and decode the data from all the bands simultaneously, and from a number of carriers limited by the UE capability.

In SCN scenarios, the Macro BS can be a mobility anchor point for the UE, providing the control signalling for handovers of the UE between small cells. Whilst a Pico BS 21 is shown by way of example, it should be noted that various types of station can provide the small cells, including Home eNBs (HeNBs) providing Femto cells, or even other UEs if these can operate in a device-to-device (D2D) mode. Thus, other base stations 22-26 shown in Figure 2 could form other Pico cells or alternatively, Femto cells which are even lower power and smaller range than the Pico cell around pico base station 21. Any such cells are henceforth referred to simply as "small cells".

It should be noted that the presence of a Macro cell is not essential and the SCN may consist only of small cells. In any case, however, coordination among the cells at the same or nearby location is required and this is conveniently provided by a primary eNB such as the Macro BS 20 even for UEs not directly connected to the Macro BS.

To assist in understanding the invention to be described, some explanation will now be given of the E-UTRAN layers for data and signalling, which are defined at various levels of abstraction within an LTE network.

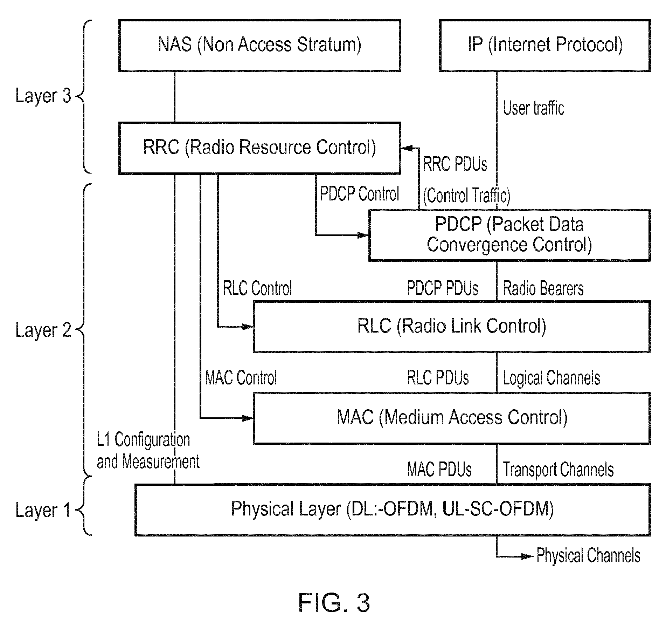

Figure 3 shows some of the protocol layers defined in LTE at each of a physical channel level (Layer 1); transport channel level, logical channel level, radio bearer level and control traffic level (together forming Layer 2); and the Layer 3 levels of radio resource control and Non-Access Stratum (NAS) for the control plane and Internet Protocol (IP) for the user traffic.

On the downlink, at the physical layer level, each cell conventionally broadcasts a number of channels and signals to all UEs within range, whether or not the UE is currently being served by that cell. Of particular interest for present purposes, these include a Physical Broadcast Channel PBCH. PBCH carries a so-called Master Information Block (MIB), which gives, to any UEs within range of the signal, basic information as described below. Primary and Secondary Synchronization Signals (PSS/SSS) are also broadcast to all devices within range. In addition to establishing a timing reference for a cell, these carry a physical layer cell identity and physical layer cell identity group for identifying the cell. These kinds of information are referred to below as "synchronization information".

In LTE specifications, a UE can be considered as either synchronised or unsynchronised with respect to a cell. Successfully decoding the PSS and SSS allows a UE to obtain the synchronization information, including downlink timing and cell ID for a cell; in other words the UE becomes "synchronized" with the cell. In the synchronized state, the UE can transmit signals in the uplink (assuming resources are made available by the network, with a defined timing (the uplink timing is obtained by subtracting a "timing advance" TA from the downlink timing).

Once a UE has decoded a cell's PSS and SSS it is aware of the cell's existence and may decode the MIB in the PBCH referred to earlier. The PBCH is transmitted every frame, thereby conveying the MIB over four frames. The MIB includes some of the basic information which the UE needs to join the network, including system bandwidth, number of transmit antenna ports, and system frame number (SFN). Reading the MIB enables the UE to receive and decode the System Information Blocks (SIBs). The first System Information Block (SIB1) is relevant when evaluating if a UE is allowed to access a cell. When a UE-to-cell association is formed, the UE can begin to receive user data (packets) from the cell (or serving cell), and/or transmit user data to the cell.

A UE can be in RRC Idle state (or Idle Mode) in which it is not known to the eNB, or in RRC Connected State in which it is connected. For a UE operating in Idle Mode in cellular systems such as GSM, LTE, UMTS and CDMA2000, there are defined procedures for cell connection that typically have to be performed.

As part of the cell selection procedure, a UE conventionally performs various kinds of Layer1 (physical layer) measurements as follows:

### Reference Signal Receive Power (RSRP)

RSRP is the most basic of the Physical layer measurements. It is a linear average of the downlink Reference Signals, in watts, across the channel bandwidth. RSRP gives no indication of the signal quality.

### Received Signal Strength Indicator (RSSI)

RSSI is the entire UE received power, including the wanted power from the serving cell, as well as all other (unwanted) co-channel power (interference) and noise.

### Reference Signal Receive Quality (RSRQ)

Given RSRP and RSSI, the RSRQ is defined as a ratio between RSRP and RSSI. RSRQ does not accurately measure the quality of the measured cell as the RSSI also includes the co-channel interference.

Although the above measurements are related to LTE, similar measurements are available in other RATs. In Wi-Fi for example there are the RSSI (Received Signal Strength Indication), Received Channel Power Indicator (RCPI) as metrics for signal strength, and the Received Signal to Noise Indicator (RSNI) defined as a metric for signal quality in the downlink.

Conventionally, a cell selection criterion employing one or more of the above measurements may be employed to decide whether any communications links with the UE should be handed over from one cell to another. The criterion is typically based on whether a measured signal from a particular cell exceeds a given threshold.

Co-operation between multiple radio networks is a key to improving traffic capacity and coverage and extending the achievable user-data rates of wireless communication systems. The radio networks of interest may be controlled by different operators and may use different Radio Access technologies (RATs), such as LTE, UMTS and WiFi.

In the future handover and joint working between such networks is likely to be supported on a routine basis, and there would typically be a large number of cells potentially available to a given UE.

If a UE is served by a given cell provided by a base station (e.g. eNB in LTE), then the UE will make measurements on candidate cells, and report the results to the eNB, which may then initiate a handover, if a "better" cell is available to the UE. Currently the handover decision would be based on signal strength (i.e. RSRP), signal quality (i.e. RSRQ) measured at the UE and reported to the eNB, and information known to the eNB. In the case where the target cell is controlled by another eNB, this could include base station capabilities and willingness to accept a handover.

In systems like LTE and UMTS, the UE can make measurements on multiple cells, and these measurements are reported to the network according to defined triggering criteria. The handover decision is then taken by the network. In a typical handover scenario a UE may reach a cell border and with lower RSRP and identify another cell with a higher RSRP, triggering a measurement report. The serving eNB may then decide to initiate a handover to the new cell (which could be controlled by another eNB). However, in order to initiate an appropriate handover attempt to a cell controlled by another eNB, the serving eNB would benefit from information on the current status of target eNB (such as the available communication resources), which can be exchanged by inter-eNB signalling. If there is a high density of cells, it may not be feasible to provide sufficient inter-eNB information exchange for timely handover decisions, particularly if the eNBs belong to different operators. Currently in systems like LTE reporting of RRM measurements by the UE can be controlled to some extent by configuring the UE with cell-specific offsets to favour (or not) specific cells. This mechanism may be sufficient for handover among cells of the same operator in currently typical scenarios, but is not suitable for tracking dynamic changes or for handover between operators (which could need to be supported in 5G). In addition, the currently available measurement triggering conditions may not be suitable to reliably achieve timely and beneficial handovers without frequent measurement reporting and a consequent signalling and processing overhead.

Meanwhile in the case of Wi-Fi, the terminal itself decides which AP to connect to. The terminal would similarly benefit from information on the current status of target AP, such as the available communication resources.

### Summary of the Invention

According to a first aspect of the present invention, there is provided a wireless communication system providing a plurality of cells controlled by at least one primary station, and a secondary station arranged for wireless communication with a subset of the plurality of cells, the subset including a first cell which is a serving cell for the secondary station, and one or more second cells at least one of which is a non-serving cell for the secondary station; wherein
at least one of the first and second cells is arranged to broadcast at least one indication relating to performance;
the secondary station is responsive to the at least one broadcast indication from the at least one of the first and second cells to compute values of at least one performance metric for each of at least two of the first and second cells and, based on the computed values of the performance metric, to send a report to the primary station;
and wherein the performance metric takes into account, in addition to the at least one broadcast indication, either or both of:
capabilities of the secondary station; and
available communications resources associated with a cell and estimated or measured by the secondary station.

Here, the "indication relating to performance" relates to the performance of a cell in relation to one or more parameters relevant to the secondary station. Preferably, the at least one broadcast indication relating to performance of a cell comprises at least one of:
bandwidth available for communication;
number of carriers available for communication;
time slots available for communication;
an available data rate;
an available latency;
transmission power; and
number of antennas.

Preferably, the at least one broadcast indication is included in a system information block or a beacon frame.

The secondary station may calculate any one or more of the following kinds of performance metric for a cell:-
an expected data rate achievable by the secondary station in communication with the cell;
an expected latency of data transmission between the secondary station and the cell;
an energy consumption needed by the secondary station to perform wireless communication at a given data rate with the cell; and
an energy consumption needed by the primary station controlling the cell to perform wireless communication with the secondary station.

Preferably the report sent by the secondary station includes at least one of:
a performance metric (any as defined above) for at least one second cell;
a performance metric for the first cell;
the difference between values of a performance metric between two cells of the plurality of cells; and
a measurement made on the first and/or one of the second cells.

In an embodiment, the report contains information relating to the uplink only.

In any system as referred to above, each of the first and second cells may be any of:
a downlink cell;
an uplink cell; and
a downlink and uplink cell.

In any system as referred to above, the primary station may be responsive to the report to hand over at least one of a downlink and an uplink of a serving cell for the secondary station to a non-serving cell for the secondary station, whereby the non-serving cell becomes a serving cell.

In any system as referred to above, the first and at least one second cell may be provided by different operators.

In any system as referred to above, the first and at least one second cell may have different carrier frequencies.

According to a second aspect of the present invention, there is provided a secondary station (terminal or UE for example) for use in a wireless communication system providing a plurality of cells controlled by at least one primary station, the secondary station arranged for wireless communication with a subset of the plurality of cells, the subset including a first cell which is a serving cell for the secondary station, and one or more second cells at least one of which is a non-serving cell for the secondary station; wherein
at least one of the first and second cells is arranged to broadcast at least one indication relating to performance;
the secondary station is responsive to at least one broadcast indication, received from at least one of the cells and relating to performance, to compute at least one performance metric for at least two of the first and second cells and, based on the computed values of the performance metric, to send a report to the primary station; wherein the performance metric takes into account, in addition to the at least one broadcast indication, either or both of:
capabilities of the secondary station; and
available communications resources associated with a cell and estimated or measured by the secondary station.

According to a third aspect of the present invention, there is provided a primary station (for example, base station and/or access point) for use in a wireless communication system to control one or more of a plurality of cells in the system, a secondary station in the system being arranged for wireless communication with a subset of the plurality of cells, the subset including a first cell which is a serving cell for the secondary station, and one or more second cells at least one of which is a non-serving cell for the secondary station; wherein the primary station is arranged to:
broadcast, via at least one of the first and second cells, at least one indication relating to performance.

According to a fourth aspect of the present invention, there is provided a primary station for use in a wireless communication system to control one or more of a plurality of cells in the system, a secondary station in the system being arranged for wireless communication with a subset of the plurality of cells, the subset including a first cell which is a serving cell for the secondary station, and one or more second cells at least one of which is a non-serving cell for the secondary station; wherein the primary station is arranged to:
receive, from the secondary station, a report sent by the secondary station in response to at least one broadcast indication relating to performance and based on the secondary station computing at least one performance metric for at least two of the first and second cells;
wherein the performance metric takes into account, in addition to the at least one broadcast indication, either or both of:
   capabilities of the secondary station; and
   available communications resources associated with a cell and estimated or measured by the secondary station.

The above third and fourth aspects may be combined. That is, the same primary station may both broadcast the at least one indication relating to performance and receive the report sent in response by the secondary station.

According to a fifth aspect of the present invention, there is provided a wireless communication method employing a plurality of cells controlled by at least one primary station, a secondary station performing wireless communication with a subset of the plurality of cells, the subset including a first cell which is a serving cell for the secondary station, and one or more second cells at least one of which is a non-serving cell for the secondary station; the method comprising:
broadcasting, from at least one of the first and second cells, at least one indication relating to performance; and
in the secondary station, responding to the at least one broadcast indication from the at least one of the cells by computing at least one performance metric for at least two of the first and second cells and, based on the computed values of the performance metric, sending a report to the primary station;
wherein the performance metric takes into account, in addition to the at least one broadcast indication, either or both of:
capabilities of the secondary station; and
available communications resources associated with a cell and estimated or measured by the secondary station.

Thus, embodiments of the present invention may provide a novel mechanism allowing a secondary station (e.g. UE) to report measurements based on the available communications resources associated with a non-serving cell, together with other measurements such as signal strength and/or signal quality.

In a future complex radio environment where the eNB serving a UE is not fully aware of the status or capabilities of all potential serving cells, it is advantageous for the eNB to be provided with such information. In particular, if an eNB can know the amount of available resources in each cell suitable for handover, then it can make a better handover choice. This will improve the efficiency of network operation and user experience.

Features in embodiments include the following:
- A system providing a plurality of cells (possibly provided by a plurality of primary stations)
- The plurality of cells broadcast indications related to performance
- At least one of the cells is a serving cell for a secondary station (at least one cell is not a serving cell)
- The secondary station computes performance metrics for detected ones of the cells
- Based on the values of the performance metrics, the secondary station reports measurement/metrics for one or more cells to a primary station providing a serving cell for the secondary station.

The term "cell" used above is to be interpreted broadly, and may include, for example, the communication range of a transmission point or Wi-Fi access point. As mentioned earlier, cells are normally provided by base stations. It is envisaged that the base stations will typically take the form proposed for implementation in the 3GPP LTE and 3GPP LTE-A groups of standards, and may therefore be described as an eNB (eNodeB) (which term also embraces Home eNB or HeNB) as appropriate in different situations. However, subject to the functional requirements of the invention, some or all base stations may take any other form suitable for transmitting and receiving signals from other stations.

The "terminal" referred to above may take the form of a user equipment (UE), subscriber station (SS), or a mobile station (MS), a station (STA) or wireless transmit/receive unit (WTRU) in Wi-Fi, or any other suitable fixed-position or movable radio device. For the purpose of visualising the invention, it may be convenient to imagine the terminal as a mobile handset (and in many instances at least some of the terminals will comprise mobile handsets), however no limitation whatsoever is to be implied from this.

An apparatus according to preferred embodiments of the present invention can comprise any combination of the features mentioned above. Methods according to invention embodiments can be described as computer-implemented in that they require processing and memory capability.

The apparatus according to preferred embodiments is described as configured or arranged to carry out certain functions. This configuration or arrangement could be by use of hardware or middleware or any other suitable system. In preferred embodiments, the configuration or arrangement is by software.

According to a further aspect there is provided a program which when loaded onto a terminal configures the terminal to carry out the method steps according to any of the preceding method definitions or any combination thereof.

In general the hardware mentioned may comprise the elements listed as being configured or arranged to provide the functions defined. For example this hardware may include a receiver, a transmitter (or a combined transceiver), a processor, memory/storage medium, a user interface and other hardware components generally found in a terminal.

The invention can be implemented in digital electronic circuitry, or in computer hardware, firmware, software, or in combinations of them. The invention can be implemented as a computer program or computer program product, i.e., a computer program tangibly embodied in an information carrier, e.g., in a machine-readable storage device or in a propagated signal, for execution by, or to control the operation of, one or more hardware modules. A computer program can be in the form of a stand-alone program, a computer program portion or more than one computer program and can be written in any form of programming language, including compiled or interpreted languages, and it can be deployed in any form, including as a stand-alone program or as a module, component, subroutine, or other unit suitable for use in a data processing environment. A computer program can be deployed to be executed on one module or on multiple modules at one site or distributed across multiple sites on the vehicle or in the back-end system and interconnected by a communication network.

Method steps of the invention can be performed by one or more programmable processors executing a computer program to perform functions of the invention by operating on input data and generating output data.

The invention is described in terms of particular embodiments. Other embodiments are within the scope of the following claims. For example, the steps of the invention can be performed in a different order and still achieve desirable results.

### Brief Description of the Drawings

Reference is made, by way of example only, to the accompanying drawings in which:
Figure 1 illustrates a basic system architecture in LTE;
Figure 2 illustrates a Small Cell Network, SCN;
Figure 3 shows the various channels in LTE;
Figure 4 illustrates a terminal being served by multiple cells;
Figure 5 is a flow diagram of a general embodiment;

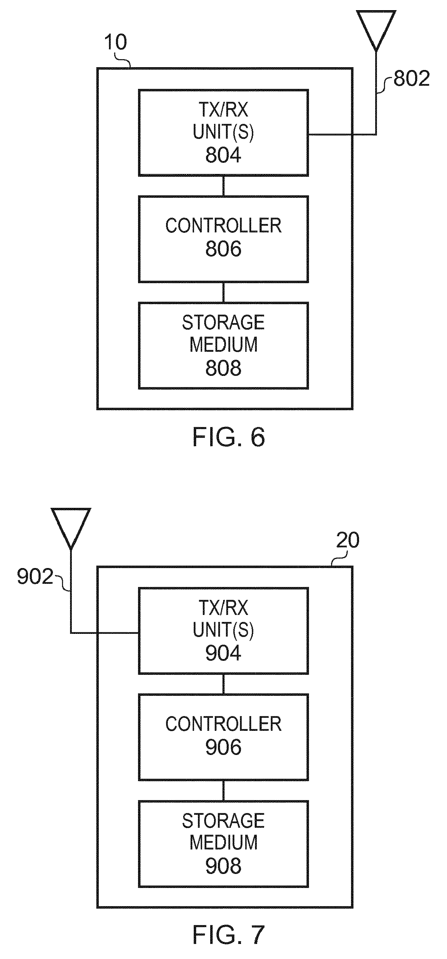

Figure 6 is a schematic diagram of a terminal or UE to which the present invention may be applied; and
Figure 7 is a schematic diagram of a base station or eNB to which the present invention may be applied.

### Detailed Description

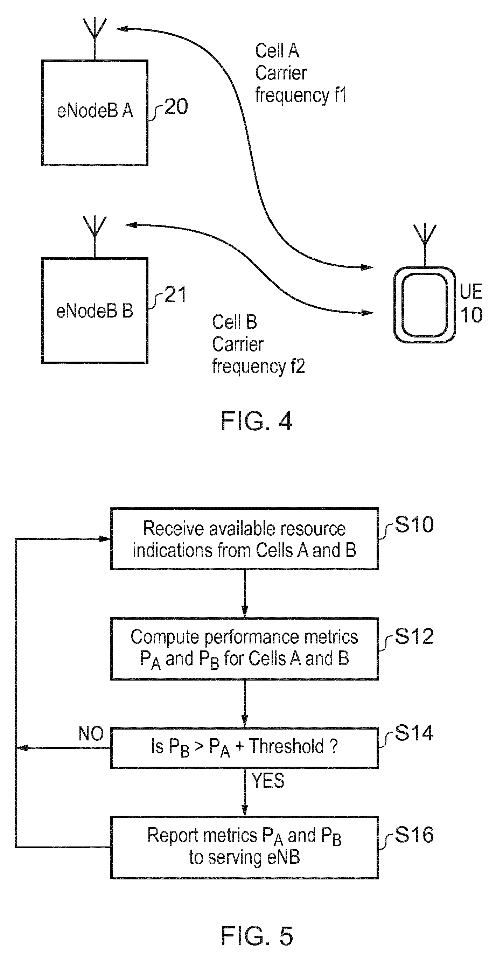

Figure 4 illustrates one scenario of interest, in which a UE 10 is served by an eNB 20 providing a cell, Cell A as a current serving cell, and the UE 10 is also within range of at least one other cell, Cell B ("candidate cell") provided by another eNB 21.

The invention is based on the recognition that in some scenarios of interest the UE 10 may be able to have a better understanding of the existence and characteristics of potentially suitable cells for handover than individual eNBs 20 or 21 in the network. In order to support this way of working it would be beneficial if the UE can be provided with additional information to help it evaluate the pros and cons of the cells which are candidates for handover. This can lead to improved metrics on which to base triggering of measurement reports, providing the eNB with more useful reports, and ensuring that the consequential signalling overhead is worthwhile.

For each of a plurality of candidate cells, such information provided to, or obtained by, the UE could include:-
* Available communications resources (in DL and UL) e.g. in terms of Bandwidth, Number of Carriers, Time slots
* Available transmission power (in DL)
* Radio link quality (in DL and UL)
* Path loss (in UL)
* Available data rate from the cell (in DL and UL)

Some of the above factors will depend on the UE location with respect to the cell. Others may depend on the traffic loading or processing resources available for that cell. For example, if the cell is loaded with traffic the proportion of the resources available for an additional UE may be much less than 100%. In such a case, a calculation of available bit rate based on the carrier bandwidth (system bandwidth in LTE) would be an overestimate. Therefore it is desirable to be able to update such information dynamically, for example by suitable signalling to the UE.

To support handover based on improved UE knowledge, additional metrics should be included in measurement reports relating to individual cells, and also used in triggering measurement reports. These could include:-
* Available data rate (in DL or UL)
* Latency for data transmission (in DL or UL)
* Power consumption to achieve a given data rate (e.g. the available data rate) (in DL or UL)

Here, the power consumption is that of the UE, which the UE calculates based on the obtained information with respect to candidate cells and other information available to the UE.

Figure 5 is a flowchart for an example of the operation of the invention from the UE perspective, where Cell A is a serving cell and Cell B is a candidate cell (or one of a plurality of candidate cells), and assuming a system in which a handover decision rests with a base station (eNB).

In step S10 the UE receives indications from each of Cell A and Cell B of the available resources in those cells.

In step S12 the UE computes at least one performance metric P (described in more detail below) for each of Cells A and B, yielding values P_{A} and P_{B} respectively.

In S14 the UE judges whether the computed value P_{B} of the performance metric exceeds the value P_{A} for the current serving cell by more than a threshold value. If not (S14, NO) the flow returns to the start (allowing the process to be repeated with respect to a different candidate Cell B if required). If, however, the criterion in S14 is satisfied (S14, YES) the flow proceeds to S16 where the UE reports the values of metrics P_{A}, P_{B} to the serving eNB of Cell A. This assists the serving eNB in taking a handover decision to hand over the UE to Cell B.

Incidentally, it should be noted that in S16 it is not essential for the performance metrics P_{A}, P_{B} to be explicitly reported to the eNB. In a first alternative the UE reports not the performance metric itself, but the fact that the performance metric P_{B} for Cell B exceeds that P_{A} for Cell A by the threshold value (and optionally, by how much).

In a second alternative the UE, instead of (or in addition to) the performance metric, sends a conventional measurement report to the eNB, of any of the kinds mentioned in the introduction. The difference is that in accordance with the present invention the UE sends the report only in respect of candidate cells satisfying the criterion in step S14.

The report in S16 may be a report in respect of the specific combination of two cells, Cell A and one candidate Cell B. Alternatively, however, the UE may complete the computation of the performance metrics for all pairs of cells (i.e., the combination of Cell A with every available Cell B) and send a single consolidated report covering multiple such combinations of cells. Such a consolidated report may be confined to cell pairs for which Cell B exceeds Cell A by the threshold value.

To adapt the Fig. 5 process to Wi-Fi APs, a user of a terminal can select an AP based on the received signal, and typically the terminal presents the user with a list of SSIDs in descending order of signal strength. However, by applying the above principle of the invention, the list may instead be presented in order of the calculated performance metric such as estimated data rate. Alternatively the terminal may be configured automatically to connect to the AP of highest performance metric value.

In the case of a combination of LTE/UMTS and Wi-Fi networks, the APs could be treated like cells for the purposes of Fig. 5.

Some more specific embodiments of the present invention will now be described. In general, unless otherwise indicated, the embodiments described below assume the existence of at least one LTE-based RAN (possibly co-operating with other RANs based on LTE or other RATs), where the network comprises multiple eNodeBs, each controlling one or more downlink cells, and at least some of the downlink cells having a corresponding uplink cell. Each DL cell may serve one or more terminals (UEs) which may receive and decode signals transmitted in that serving cell. When a UE leaves the coverage area of one serving cell and enters that of another, a handover process may be initiated by the network. However the target of the handover need not be confined to cells of the LTE-based RAN. Thus, the term "cell" includes where appropriate the communication range of a Wi-Fi AP.

In the first embodiment, one or more cells broadcast an indication of the available resources in that cell. In the case of LTE or UMTS, this indication may be transmitted in system information (SIB). As already mentioned a UE must be synchronized to a cell in order to read the SIB from that cell; however, being synchronized to a cell does not necessarily make the cell a serving cell for that UE.

Likewise, in Wi-Fi an AP broadcasts beacon frames to inform stations of system parameters, and currently-unused fields in the beacon frame could be employed to broadcast the above mentioned indication.

The indication may comprise one or more of:
* Bandwidth available for communication (e.g. fraction of the system bandwidth)
* Number of carriers available for communication
* Time slots available for communication (e.g. fraction of time slots in the frame structure)
* An available data rate
* An available latency (e.g. time delay needed to transmit/receive a packet)
* Transmission power
* Number of antennas (or number of spatial layers)

The "available data rate" refers to the throughput available via a cell. In the case of Wi-Fi, an estimated throughput parameter was recently defined at the 802.11 SME (Station Management Entity) interface in IEEE 802.11-14/0792r7, which is hereby incorporated by reference. This allows the SME to request and receive an estimate of the throughput that the terminal can expect to achieve if it associates with a specified set of APs.

The indication may also not need to contain some items of the above information, if the difference in values among the serving cell and the neighbour cell is not significant. For example two cells may have the same carrier frequency, so a value broadcast for one cell could be assumed by the UE to apply to both cells.

Alternatively, by not indicating a metric explicitly, the UE may assume that there is no significant difference in that metric between cells (i.e. the UE may assume that there would be no performance difference with respect to that metric).

It will be noted that not all the cells need be controlled by the same eNB. If more than one eNB is involved, the UE could make a default assumption for the case where no information is broadcast, and then the eNB would only broadcast an item for information for which the default value does not apply. The default value could be configured by the network.

Separate indications may be provided for UL and DL. More generally, DL and UL may be treated separately for the purposes of the present invention, such that the process of Figure 5 is performed with respect to, for example, UL only and if desired can be repeated for DL.

The UE computes one or more performance metrics for each cell detected (e.g. related to the expected data rate that the cell can support, with the possibility of separate metrics for UL and DL). These calculations may also depend on UE capabilities (e.g. peak bit rate supported, number of antennas, number of spatial layers supported, number of carriers supported).

The calculations may also depend on the available resources sensed/measured by a UE, such as the traffic loading situation in a cell. The UE can estimate what fraction of the radio resources of a cell are currently in use by observing transmissions from the eNB, for example to find out what fractions of sub-frames/sub-carriers are occupied by signals. As an example, in order to determine the fraction of total time/frequency resources which are available, the UE could be informed by the cell what fraction of bandwidth is available, but be expected to estimate by itself what proportion of subframes are available (or vice-versa).

The UE applies rules based on the available values of the metric(s) per cell to determine if certain conditions are met. These rules are typically designed to establish if there is a better cell available which can replace the current serving cell(s) (i.e. whether or not it would be beneficial to carry out a handover, and if so, to which cell(s)). If the relevant conditions are met then a measurement report is triggered and the UE reports the values of the metrics for at least some of the detected cells.

In a variation of the first embodiment, independent triggering of reports is possible for UL and DL. Each of the independent triggering conditions may be dynamically configured to be "active" or "inactive". Here, the triggering conditions can include for example any of the relevant conditions mentioned above.

A distinction for handover purposes may therefore be made between DL and UL. Currently in LTE, a UE has a serving cell in respect of the DL and also a serving cell for the UL (even if the UE does not have any capability to use the UL for that cell). However, there can be more than one serving cell for the same UE, so the "handover" referred to here need not involve ending the connection with the existing serving cell, but rather can involve a partial handover for offloading of some of the UE's traffic. Thus, handover may be independent for UL and DL (i.e. the serving cells may be different in UL and DL). As one example, the handover may involve adding a serving cell for DL only so as to meet an increased DL data demand of the UE, required by a video streaming service or the like.

In a further variation of the first embodiment cells are provided by different operators (different RANs whether or not using the same RAT). The handover decision may still be taken at the serving cell eNB, but may involve input from (or the handover decision may be taken by) a higher-level, possibly inter-RAN, node.

A second embodiment is like the first embodiment except that the metric(s) computed by the UE are based on the energy/power needed by the UE to achieve communications in the UL and/or DL.

This can replace the expected data-rate metric employed in the first embodiment. As an example for the UL, the UE may estimate the power needed to transmit at a given data rate in each of one or more uplinks, assuming that all potential resources of the cell are available.

In a variation of the second embodiment, the metrics are based on the energy/power needed by the network to provide communications in the UL and/or DL. In practice, this is likely to mean the power consumed by the eNB or AP controlling the cell concerned, since the power consumption elsewhere in the network can be assumed to be similar for any cell.

A third embodiment is like the first embodiment except that the metric(s) computed by the UE are based on the latency for data transmission required by the UE in the DL or UL. Depending on the type(s) of service running on the UE, the latency may or may not be adequate to meet a required Quality of Service, which would influence the handover decision. As an example, some eNBs may have a backhaul with lower performance, or the backhaul may be temporarily congested, and not able to support low latency communications. In its simplest form a cell may provide information on the shortest latency currently possible. Alternatively, a cell may indicate the available data rate that could be supported at the lowest available latency.

The above embodiments may be combined. For example the UE may employ both the expected data-rate metric of the first embodiment and the energy/power metric of the second embodiment. Thus, as an example for the UL, the UE could estimate the power needed to transmit at a given data rate in each of one or more uplinks, assuming that some proportion of the resources in the cell are available to the UE, the proportion being determined according to the first embodiment.

Various modifications are possible within the scope of the present invention.

For convenience, the invention has been described with respect to specific cells. However, the invention can be applied without the necessity for cells, and may be described in terms of the communications between different stations (including base stations supporting cells, mobile stations (e.g. D2D), and other types of station such as relays, and to communication via Remote Radio Heads of base stations).

The invention is equally applicable to LTE FDD and TDD, and to mixed TDD/FDD implementations (i.e. not restricted to cells of the same FDD/TDD type). The principle can be applied to other wireless cellular communications systems such as UMTS, as well as WLAN technologies such as IEEE 802.11 (Wi-Fi). Accordingly, references in the claims to a "secondary station" are intended to cover any kind of user device, subscriber station, mobile terminal and the like and are not restricted to the UE of LTE.

In any of the aspects or embodiments of the invention described above, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

It is to be clearly understood that various changes and/or modifications may be made to the particular embodiments just described without departing from the scope of the claims.

### Industrial Applicability

In a future complex radio environment where a BS/AP serving a terminal is not fully aware of the status or capabilities of all potential serving cells, it is advantageous for the BS/AP to be provided with such information. In particular, if the BS/AP can know the amount of available resources in each cell suitable for handover, then it can make a better handover choice. This will improve the efficiency of network operation and user experience. It is therefore advantageous for the terminal to provide improved measurement reports based on improved metrics, and therefore that the terminal can be provided with information which can help the terminal to determine when to submit measurement reports. Alternatively, where the handover decision is taken at the terminal, it is advantageous if the terminal can derive the status or capabilities of all potential serving cells by combining information notified to it by the cells with information which the terminal obtains by other means.

## Claims

1. A wireless communication system providing a plurality of cells controlled by at least one primary station, and a secondary station arranged for wireless communication with a subset of the plurality of cells, the subset including a first cell which is a serving cell for the secondary station, and one or more second cells at least one of which is a non-serving cell for the secondary station; wherein
at least one of the first and second cells is arranged to broadcast at least one indication relating to performance;
the secondary station is responsive to said at least one broadcast indication from said at least one of the first and second cells to compute values of at least one performance metric for each of at least two of the first and second cells and, based on the computed values of the performance metric, to send a report to the primary station;
and wherein the performance metric takes into account, in addition to said at least one broadcast indication, either or both of:
capabilities of the secondary station; and
available communications resources associated with a cell and estimated or measured by the secondary station.

2. The system according to claim 1 wherein said at least one broadcast indication relating to performance of a cell comprises at least one of:
bandwidth available for communication;
number of carriers available for communication;
time slots available for communication;
an available data rate;
an available latency;
transmission power; and
number of antennas.

3. The system according to claim 1 or 2 wherein said at least one broadcast indication is included in a system information block or a beacon frame.

4. The system according to any preceding claim, wherein the at least one performance metric for a cell includes an expected data rate achievable by the secondary station for communication between the secondary station and said cell.

5. The system according to any preceding claim, wherein the at least one performance metric for a cell includes an expected latency of data transmission between the secondary station and said cell.

6. The system according to any preceding claim, wherein the at least one performance metric for a cell includes an energy consumption needed by the secondary station to perform wireless communication at a given data rate with said cell.

7. The system according to any preceding claim, wherein the at least one performance metric for a cell includes an energy consumption needed by the primary station controlling said cell to perform wireless communication with the secondary station.

8. The system according to any preceding claim wherein the report includes at least one of:
a performance metric for at least one second cell;
a performance metric for the first cell;
the difference between values of a performance metric between two cells of the plurality of cells; and
a measurement made on the first and/or one of the second cells.

9. The system according to any preceding claim, wherein the report contains information relating to the uplink only.

10. The system according to any preceding claim wherein each of the first and second cells is any of:
a downlink cell;
an uplink cell; and
a downlink and uplink cell.

11. The system according to any preceding claim wherein the primary station is responsive to the report to hand over at least one of a downlink and an uplink of a serving cell for the secondary station to a non-serving cell for the secondary station, whereby the non-serving cell becomes a serving cell.

12. A secondary station for use in a wireless communication system providing a plurality of cells controlled by at least one primary station, the secondary station arranged for wireless communication with a subset of the plurality of cells, the subset including a first cell which is a serving cell for the secondary station, and one or more second cells at least one of which is a non-serving cell for the secondary station; wherein
at least one of the first and second cells is arranged to broadcast at least one indication relating to performance;
the secondary station is responsive to at least one broadcast indication, received from at least one of the cells and relating to performance, to compute at least one performance metric for at least two of the first and second cells and, based on the computed values of the performance metric, to send a report to the primary station;
wherein the performance metric takes into account, in addition to said at least one broadcast indication, either or both of:
capabilities of the secondary station; and
available communications resources associated with a cell and estimated or measured by the secondary station.

13. A primary station for use in a wireless communication system to control one or more of a plurality of cells in the system, a secondary station in the system being arranged for wireless communication with a subset of the plurality of cells, the subset including a first cell which is a serving cell for the secondary station, and one or more second cells at least one of which is a non-serving cell for the secondary station; wherein the primary station is arranged to:
broadcast, via at least one of the first and second cells, at least one indication relating to performance.

14. A primary station for use in a wireless communication system to control one or more of a plurality of cells in the system, a secondary station in the system being arranged for wireless communication with a subset of the plurality of cells, the subset including a first cell which is a serving cell for the secondary station, and one or more second cells at least one of which is a non-serving cell for the secondary station; wherein the primary station is arranged to:
receive, from the secondary station, a report sent by the secondary station in response to receiving at least one broadcast indication relating to performance and based on the secondary station computing at least one performance metric for at least two of the first and second cells;
wherein the performance metric takes into account, in addition to said at least one broadcast indication, either or both of:
capabilities of the secondary station; and
available communications resources associated with a cell and estimated or measured by the secondary station.

15. A wireless communication method employing a plurality of cells controlled by at least one primary station, a secondary station performing wireless communication with a subset of the plurality of cells, the subset including a first cell which is a serving cell for the secondary station, and one or more second cells at least one of which is a non-serving cell for the secondary station; the method comprising:
broadcasting, from at least one of the first and second cells, at least one indication relating to performance; and
in the secondary station, responding to said at least one broadcast indication from said at least one of the cells by computing at least one performance metric for at least two of the first and second cells and, based on the computed values of the performance metric, sending a report to the primary station;
wherein the performance metric takes into account, in addition to said at least one broadcast indication, either or both of:
capabilities of the secondary station; and
available communications resources associated with a cell and estimated or measured by the secondary station.
